# EUROPEAN PATENT SPECIFICATION

(11) **EP 0 637 206 B1**
(45) Date of publication and mention of the grant of the patent: **26.03.1997**
(21) Application number: 93911855.0
(22) Date of filing: 22.04.1993
(51) Int. Cl.: A23G 9/02

(54) **CONFECTION**
KONFEKT
FRIANDISE

(30) Priority: 24.04.1992 EP 92303683
(43) Date of publication of application: 08.02.1995
(73) Proprietor: UNILEVER PLC, London EC4P 4BQ (GB); UNILEVER N.V., 3013 AL Rotterdam (NL)
(72) Inventor: HOLT, Christopher Brunsden, Bedford MK43 7NP (GB)
(74) Representative: Kirsch, Susan Edith
(86) International application number: GB9300838
(87) International publication number: WO9321776

(56) References cited:
- EP-A- 0 322 469
- WO-A-90/11481
- DE-A- 1 692 383
- DE-U- 9 112 890
- US-A- 2 550 656
- US-A- 4 832 976
- PATENT ABSTRACTS OF JAPAN vol. 16, no. 148 (C-928)13 April 1992
- CENTRAL PATENTS INDEX, BASIC ABSTRACTS JOURNAL Derwent Publications Ltd., London, GB; AN 79-26865B
- PATENT ABSTRACTS OF JAPAN vol. 6, no. 261 (C-141)21 December 1982

## Description

The invention relates to an edible article having a temperature below -3°C, in particular below -10°C and in general preferably below -15°C, at least part of which is transparent. The edible articles of the invention are frozen confections comprising a transparent non-crystalline part.

It is known that tap water and aqueous solutions liberate dissolved gas on freezing, the liberated gas being one cause of opacity of ice cubes and frozen confections. Water ices and similar frozen novelties are mainly opaque due to differences in the refractive index of ice crystals and of the matrix of frozen sugar solution.

The Patent Abstracts of Japan, vol.6, no.261 (C-141), 21 December 1982 disclose the preparation of frozen food having a transparent ice shell.

There is a continuing need for novel products in the area of frozen confections and an object of the invention is to provide an edible article such as an ice lolly, which is transparent at the temperatures as defined before.

The invention provides thereto an edible article having a temperature below -3°C, at least part of which is transparent, wherein the bulk of the transparent part is in a non-crystalline state and the article is hand held with the aid of a stick positioned within the article. The storage and consumption temperatures generally are both below -10°C and often mostly below -15°C.

In practice several options are available for maintaining the non-crystalline state, one being arranging that the transparent part is in a glassy state at temperatures above -20°C and preferably above -10°C, being the usual lower limit for the consumption temperature and another arranging that the bulk of the transparent part is in a non-solidified state at temperatures down to -5°C or below, and preferably below the usual storage temperatures. The former option can be realised in practice by having an adequate concentration of sufficiently low molecular weight solutes contained in that transparent part, the latter option by having sufficient solutes contained in that transparent part of depress the freezing point thereof to below the required temperature.

Particularly in case of using freezing point depressants the perceived sweetness of the non-frozen transparent part may be reduced if it comprises a gelling agent in an amount sufficient to effect gelation at temperatures below -15°C and preferably below the usual storage temperatures, generally about -20°C. A preferred gelling agent for this purpose is gelatin and in particular one of a bloom strength between 150 and 300. A suitable concentration being from about 1% to about 5% by weight, usually about 4%.

To prevent the non-solidified part from deforming and sticking to packaging material and to the fingers of the consumer preferably at least the free surface of that part is coated with a thin layer of transparent frozen water, which may contain small amounts of dissolved matter, provided the transparency is not injured. The expression "thin" in this context is meant to exclude thicknesses which are subject to becoming opaque and generally means up to 4 mm. A thickness of 1 mm already suitably performs the protective purpose and generally a thickness of the outer layer up to 4 mm will not give rise to any cracking, turbidity or other causes for opaqueness although for organoleptic reasons a thickness up to 2½ mm is preferred.

The invention is of particular value for products intended to be hand held with the aid of a stick positioned within the product.

Having generally described the invention various aspects and preferred embodiments will be described in detail with respect to the drawings wherein
- Figure 1: shows a perspective view of an ice lolly according to one embodiment of the invention,
- Figure 2: is a longitudinal section along the line II-II in Figure 1 and
- Figure 3: is a longitudinal section of another embodiment of the invention.

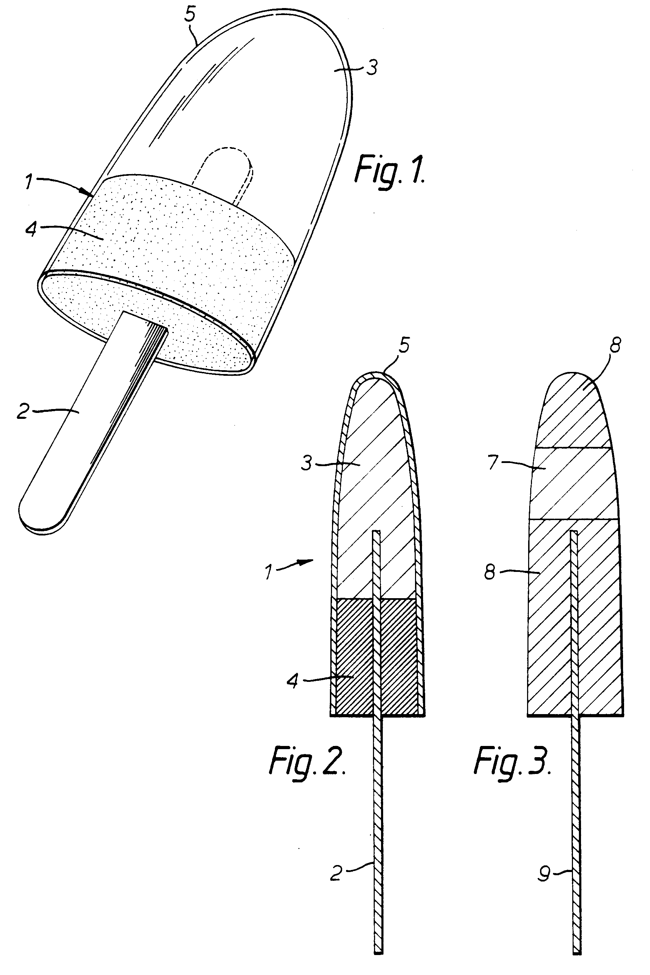

In the drawings Figures 1 and 2 are schematically showing an ice lolly, comprising an edible paddle part 1 on a usual wooden stick 2. The edible part thereof comprises a transparent part 3 at the tip remote from the stick. An opaque part 4 of usual water ice mix is arranged at the stick end of the paddle part 1.

A transparent outer coating 5 is enclosing the outer surface of both the transparent and the opaque part, except for the side facing the stick 2.

Figure 3 shows a longitudinal section similar to the one of Figure 2, comprising a transparent part 7 entirely enclosed by opaque frozen confection material 8 except for the opposite sides lying flush with the large opposite sides of the edible portion. A usual wooden stick 9 is inserted and adhered in the opaque material 8.

In the following examples preferred recipes and methods will be described for manufacturing the products as shown in the drawings.

### Example 1

A usual metal mould for manufacturing ice lollies was filled with distilled de-aerated water containing 0.4% citric acid and 0.1% aspartame. The mould was inserted in a brine bath kept at -30°C. After 40 seconds the liquid was sucked out of the mould, leaving a thin film 5 of ice of about 1 mm thickness on the inside of the mould. Because of the thinness of this layer pure water without any additions can be used as well as such a thin layer is almost unperceivable.

To form the transparent region 3 the ice coated mould was filled to of the usual level with a clear solution of the following composition:

| | | |
|---|---|---|
| A: | sucrose | 69.5% |
| | gelatin | 4% |
| | lemon flavour | 0.1% |
| | citric acid | 0.4% |
| | water | 26% |

A conventional wooden stick 2 is inserted halfway into the mould and a water ice mix of the following composition B is poured into the mould up to the usual filling level:

| | | |
|---|---|---|
| B: | sucrose | 16% |
| | 40 SE corn solids | 4% |
| | CMC | 0.4% |
| | citric acid | 0.6% |
| | lemon flavour | 0.045% |
| | water | up to 100% |

After the contents have entirely been solidified the mould is removed from the refrigerant brine and briefly sprayed with hot water for thawing up a thin superficial film of material whereafter the frozen article 1 can be removed from the mould. The article as shown in Figures 1 and 2 is now ready for eating but can also be stored and distributed at usual deep freeze temperatures.

### Example 2

The article as shown in figure 3 can be made as follows: An aqueous solution is prepared having composition A of Example 1 and frozen to a disc 7 having a diameter of 3½ cm and a thickness of 2 cm while being exposed to ultrasonic vibrations. This disc 7 is put in a metal ice lolly mould which is tapering from 2.2 cm to a narrow rounded bottom.

The mould is kept at ambient temperature and consequently the disc slowly melts at the places where it is in contact with the mould, thereby conforming to the shape of the mould and sliding towards the bottom.

As soon as the opposite faces of the disc are entirely in contact with the mould the latter is inserted in a brine bath kept at -25°C and filled to the usual filling level with a water ice mix of composition B of Example 1 to form the opaque portion 8. Thereafter a usual wooden stick 9 is inserted.

After entirely freezing the contents the mould is briefly warmed up to thaw a thin film and to remove the frozen article from the mould. The resulting article is opaque with a round transparent look through portion.

### Example 3

A product is manufactured with the following formulation:

| | |
|---|---|
| sucrose | 60% |
| glucose | 20% |
| water | 20%. |

In addition usual small quantities of colour and flavour may be added. The sucrose and glucose are added to the water which is then heated and stirred. The solution is boiled until sufficient water has evaporated that the boiling temperature is 150°C. The solution is poured into a cold mould. The solidified article may then be incorporated as part of an ice lolly. It will remain transparent because it is in the glassy state and no ice will form at any temperature.

### Example 4

63 DE corn syrup is heated in a microwave oven to evaporate water until it is boiling at 120°C. It is then removed from the oven, cooled, and used for making ice lollies or portions thereof after addition of lemon flavour. At this low moisture content it will be glassy at sub-zero temperatures so that no ice will form and therefore it is transparent. Above 0°C it transforms to a rubbery solid and therefore can be eaten.

It does not need explanation that various embodiments can be thought of: different shapes, different compositions, inserts in the transparent portion to be clearly seen and inserts attached to the inward end of the stick.

Parts and percentages in this specification and claims relate to weights unless otherwise indicated.

## Claims

1. Edible article having a temperature below -3°C, at least part of which is transparent, characterised in that the bulk of the transparent part is in a non-crystalline state and the article is hand held with the aid of a stick positioned within the article.

2. Article according to claim 1, characterised in that the bulk of the transparent part is in a glassy state at temperatures above -20°C and preferably above -10°C.

3. Article according to claim 1, characterised in that the bulk of the transparent part is in a non-solidified state at temperatures down to -5°C or below.

4. Article according to claim 3, characterised in that the bulk of the transparent part comprises a gelling agent in an amount sufficient to effect gelation at temperatures below -15°C.

5. Article according to claim 3 or 4, characterised in that the outer surface of the transparent part is coated with a transparent layer predominantly consisting of frozen water.

6. Article according to claim 1-5, characterised in that at least the free surface of the transparent part is coated with a thin outer layer of transparent frozen water containing an amount of solutes not injuring the transparency thereof.

7. Article according to claim 6, characterised in that the outer layer has a thickness generally up to 4 mm and in particular ranging between 1 and 2½ mm.

## Patentansprüche

1. Eßbarer Artikel mit einer Temperatur von weniger als -3°C, von welchem zumindest ein Teil transparent ist, dadurch gekennzeichnet, daß die Masse des transparenten Teils in einem nichtkristallinen Zustand ist, und der Artikel mit der Hand mit Hilfe eines innerhalb des Artikels angeordneten Stiels gehalten wird.

2. Artikel nach Anspruch 1, dadurch gekennzeichnet, daß die Masse des transparenten Teils bei Temperaturen von mehr als -20°C und vorzugsweise mehr als -10°C in einem glasartigen Zustand ist.

3. Artikel nach Anspruch 1, dadurch gekennzeichnet, daß die Masse des transparenten Teils bei Temperaturen bis zu -5°C oder darunter in einem nicht-verfestigten Zustand ist.

4. Artikel nach Anspruch 3, dadurch gekennzeichnet, daß die Masse des transparenten Teils ein Geliermittel in einer ausreichenden Menge, um eine Gelierung bei Temperaturen von weniger als -15°C zu bewirken, umfaßt.

5. Artikel nach Anspruch 3 oder 4, dadurch gekennzeichnet, daß die Außenfläche des transparenten Teils mit einer transparenten Schicht, die vorwiegend aus gefrorenem Wasser besteht, überzogen ist.

6. Artikel nach einem der Ansprüche 1 bis 5, dadurch gekennzeichnet, daß zumindest die freie Oberfläche des transparenten Teils mit einer dünnen Außenschicht aus transparentem gefrorenen Wasser, das eine Menge an gelösten Stoffen enthält, die die Transparenz hievon nicht beeinträchtigt, überzogen ist.

7. Artikel nach Anspruch 6, dadurch gekennzeichnet, daß die Außenschicht eine Dicke von allgemein bis zu 4 mm und insbesondere im Bereich zwischen 1 und 2,5 mm hat.

## Revendications

1. Produit comestible ayant une température inférieure à -3°C, dont une partie au moins est transparente, caractérisé en ce que la masse de la partie transparente est dans un état non cristallin et que le produit est maintenu à la main à l'aide d'un bâton fixé dans le produit.

2. Produit selon la revendication 1, caractérisé en ce que la masse de la partie transparente est à l'état vitreux à des températures au dessus de -20°C et de préférence au dessus de -10°C.

3. Produit selon la revendication 1, caractérisé en ce que la masse de la partie transparente est dans un état non solidifié aux températures inférieures à -5°C ou au dessous.

4. Produit selon la revendication 3, caractérisé en ce que la masse de la partie transparente comprend un agent de gélification en une quantité suffisante pour effectuer la gélification aux températures en dessous de -15°C.

5. Produit selon la revendication 3 ou 4, caractérisé en ce que la surface externe de la partie transparente est revêtue d'une couche transparente consistant principalement en eau surgelée.

6. Produit selon les revendications 1 à 5, caractérisé en ce qu'au moins la surface libre de la partie transparente est revêtue d'une mince couche externe d'eau surgelée transparente contenant une quantité de solutés ne nuisant pas à sa transparence.

7. Produit selon la revendication 6, caractérisé en ce que la couche externe a une épaisseur généralement jusqu'à 4 mm et en particulier allant entre 1 et 2 ½ mm.
